# FASCICULE DE BREVET EUROPEEN

(11) **EP 2 080 880 B1**
(45) Date de publication et mention de la délivrance du brevet: **06.07.2011**
(21) Numéro de dépôt: 09150570.1
(22) Date de dépôt: 14.01.2009
(51) Int. Cl.: F02C 7/266, F23R 3/00

(54) **Agencement d'une bougie de type semi-conducteur dans une chambre de combustion de moteur à turbine à gaz**
Anordnung einer Kerze vom Halbleitertyp in einer Brennkammer eines Gasturbinenmotors
Arrangement of a semi-conductor spark plug in a combustion chamber of a gas-turbine engine

(30) Priorité: 15.01.2008 FR 0800210
(43) Date de publication de la demande: 22.07.2009
(73) Titulaire: SNECMA, 75015 Paris (FR)
(72) Inventeur: Sandelis, Denis, Jean, Maurice, 77370 Nangis (FR)
(74) Mandataire: Bloch & Bonnétat

(56) Documents cités:
- EP-A- 1 619 369
- DE-A1- 1 900 035
- FR-A- 2 244 083
- FR-A- 2 290 062
- US-A- 3 048 015

## Description

La présente invention concerne le domaine des moteurs à turbine à gaz et porte plus particulièrement sur l'agencement d'une bougie du type semi-conducteur montée dans une chambre de combustion.

Dans un moteur à turbine à gaz, la chambre de combustion reçoit l'air du compresseur dont une partie est mélangée au carburant qui est brûlé dans la zone de combustion primaire. L'allumage est assuré par une ou deux bougies disposées en aval du système de carburation. Une autre partie de l'air contourne la zone de combustion primaire et vient se mélanger aux gaz de combustion. L'ensemble des gaz chauds est dirigé vers la turbine. Les chambres de combustion sont étudiées pour répondre à un certain nombre de spécifications impératives telles que : le rallumage en vol, la forme du profil de température, les émissions de gaz polluants ainsi que la tenue à la fois thermique et mécanique de ses différents composants.

En particulier le système d'allumage doit assurer le rallumage en vol en cas d'extinction accidentelle de la chambre de combustion tout en supportant et en résistant aux contraintes thermiques auxquelles il est soumis. Ces deux conditions impliquent des dispositions difficilement compatibles. En effet le système d'injection produit une nappe de carburant pulvérisé formant un certain angle. Si ce dernier est très fermé, la bougie est en dehors du cône formé par le carburant ; cela est favorable du point de vue de la tenue thermique mais les capacités d'allumage de la chambre sont réduites. Inversement un système d'injection dont la nappe de carburant forme un cône très ouvert provoque un échauffement important de la zone de la chambre environnant la bougie en raison de l'impact du carburant sur les parois et la bougie. La tenue thermique de ces éléments s'en trouve affectée.

La présente invention concerne les systèmes d'allumage dont la bougie est montée sur la chambre par l'intermédiaire d'une pièce formant adaptateur elle-même fixée sur le carter de la chambre. La bougie s'étend depuis le carter radialement vers l'intérieur de la chambre et son extrémité vient affleurer la paroi de la chambre au travers d'une ouverture ménagée dans celle-ci et fermant cheminée. Un jeu latéral minimum est ménagé autour de la bougie pour autoriser les déplacements relatifs entre la chambre et le carter résultant des variations de température pendant les différentes phases de vol sans que la bougie, solidaire du carter, ne vienne buter ou s'appuyer contre les bords de l'ouverture dans la paroi de la chambre. L'ouverture dans la paroi de chambre forme une cheminée dans laquelle la bougie est glissée et une douille flottante cerclant la bougie assure l'étanchéité entre la chambre et l'espace entre celle-ci et le carter. Un exemple de ce type de montage de bougie dans une chambre de combustion avec adaptateur est représenté dans la demande de brevet EP 1.443.190.

Un autre arrangement de bougie selon l'art antérieur est représenté dans le document EP 1619369 A2.

On note qu'il existe deux types de bougies d'allumage utilisées dans les chambres de combustions de moteurs à turbine à gaz :

Les bougies du type « haute énergie-haute tension » dont la tension de fonctionnement est de l'ordre de 20 kV et les bougies du type « haute énergie-basse tension » dont la tension de fonctionnement est de l'ordre de 2 à 3 kV. Les bougies du type « haute énergie-basse tension » comportent un matériau semi-conducteur entre leurs électrodes, de manière à ce que l'application d'une tension suffisante entre les électrodes conduise à la création d'une étincelle. La durée de vie des bougies est limitée ; dans le cas des bougies « haute énergie-haute tension », par l'usure des électrodes, et pour les bougies « haute énergie-basse tension », par l'usure du semi-conducteur, celui-ci s'usant plus vite que les électrodes.

Les avantages des bougies « haute énergie-basse tension » sont, d'une part, liés à leur fonctionnement peu dépendant des conditions de la chambre de combustion et, d'autre part, à la chaîne d'allumage de plus faible d'encombrement qu'il suffit de mettre en place pour assurer leur fonctionnement.

Suite à des séquences d'allumage répétitif, le semi-conducteur de la bougie subit d'importantes contraintes thermiques. L'impact du carburant sur le semi-conducteur; ainsi que l'arc électrique provoquent la détérioration de celui-ci entraînant une modification de sa forme.

La présente invention a pour but d'améliorer la durée de vie des bougies du type à semi-conducteur, en proposant un nouvel agencement de la bougie permettant de refroidir le semi-conducteur tout en limitant l'impact du carburant sur ce dernier.

L'objet de l'invention est d'aménager la forme de la douille flottante du système d'allumage et de modifier la gaine de la bougie afin de refroidir le semi-conducteur tout en limitant l'impact du carburant sur ce dernier. L'invention permet une limitation des contraintes thermiques sur le semi-conducteur améliorant ainsi sa durée de vie.

L'invention porte sur un agencement comprenant une bougie du type à semi conducteur dans une gaine, une cheminée pouvant être solidaire d'une chambre de combustion de moteur à turbine à gaz, une douille flottante par l'intermédiaire de laquelle la bougie est montée dans la cheminée, permettant une reprise de dilation selon un axe perpendiculaire à l'axe de la bougie. Il est caractérisé par le fait qu'il comporte des moyens de guidage d'air pour refroidir le semi conducteur de la bougie, la gaine et le semi conducteur définissant à leur extrémité du côté de la chambre de combustion une cavité annulaire de bougie, et la gaine comportant des orifices au niveau de la cavité annulaire de bougie communiquant avec la cavité annulaire de la douille et des orifices sur sa surface plane, qui en position de montage, fait à la chambre de combustion.

Selon une autre caractéristique de l'invention, la douille flottante comprend une partie cylindrique ménageant avec la bougie une cavité annulaire de circulation d'air de refroidissement.

La douille comporte plus particulièrement un disque supérieur formant une collerette coopérant avec une glissière ménagée dans la cheminée.

La présente demande concerne encore une chambre de combustion d'un moteur à turbine à gaz comportant au moins une bougie dont le montage est agencé tel que présenté ci-dessus.

La présente demande concerne encore un moteur à turbine à gaz, comportant au moins une bougie dont le montage est agencé tel que présenté ci-dessus.

On décrit maintenant l'invention plus en détail en référence aux dessins annexés sur lesquels :
La figure 1 montre en coupe longitudinale une partie d'une chambre de combustion de moteur à turbine à gaz,
La figure 2 montre une bougie du type semi-conducteur de l'art antérieur vue en coupe longitudinale,
La figure 3 montre l'agencement de la bougie selon l'invention vue en coupe longitudinale.

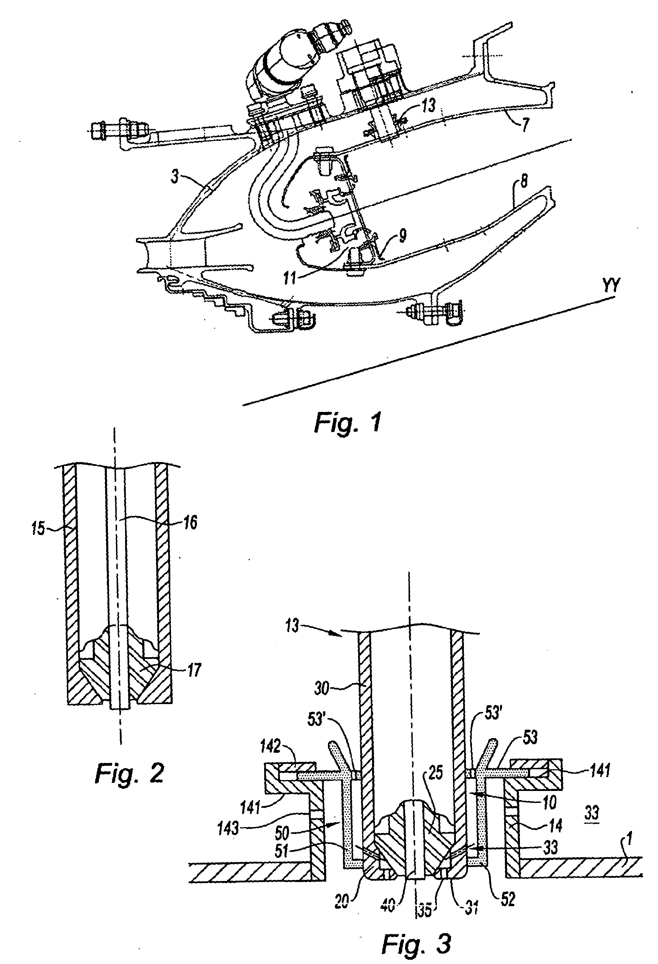

Comme on le voit sur la figure 1, la chambre de combustion 1 est contenue dans un espace annulaire formé par un carter extérieur 3. Elle comprend une ou plusieurs viroles externes 7 avec des brides ou des appuis, une ou plusieurs viroles internes 8 avec brides, un fonds de chambre 9 associés à des carénages amont. Une pluralité de cannes d'injection de carburant, réparties autour de l'axe du moteur débouche dans le fond de chambre 9. Des déflecteurs 11 forment un bol autour de chaque canne d'alimentation, dévient une partie de l'air qui a pénétré dans la zone carénée en direction radiale et tourbillonnante vers le carburant pulvérisé, et assurent ainsi la formation d'un mélange de carburant avec de l'air. Une zone de combustion primaire est formée en aval du fond de chambre dans laquelle le mélange est allumé par une bougie 13 ou plusieurs réparties circonférentiellement.

La figure 2 présente le schéma de principe de conception d'une bougie du type à semi-conducteur. Celle-ci se compose d'un corps métallique tubulaire constituant la gaine ou l'électrode externe 15 de la bougie et d'une électrode centrale 16. L'isolation électrique de l'électrode centrale est assurée par un manchon intercalé entre la gaine 15 et l'électrode centrale 16, non représenté sur la figure. A l'extrémité de la bougie se trouve le semi-conducteur 17 en céramique qui relie les extrémités de l'électrode centrale 16 et de la gaine 15. La paroi interne de la gaine 15 est conique en son extrémité inférieure de manière à épouser au mieux le semi-conducteur, quant à sa paroi externe, elle forme une surface plane perpendiculaire à l'axe de bougie. La gaine ainsi réalisée retient le semi-conducteur et empêche que ce dernier ne passe dans la chambre de combustion.

Telle que présentée sur la figure 3, une bougie 13 du type à semi-conducteur selon la présente invention est constituée d'un corps tubulaire, constituant la gaine 30, et d'une électrode centrale 40, ayant le même axe de symétrie que la gaine 30. Les matériaux de la gaine 30 et de l'électrode centrale 40 sont choisis dans un matériau conducteur tel qu'un alliage d'acier nickel-chrome. La bougie 13 est guidée dans une cheminée 14. La cheminée 14 a été fixée sur une ouverture ménagée dans la chambre de combustion 1. Ladite cheminée 14 est de forme cylindrique et comporte en sa partie supérieure une surface plane 141 formant glissière sur laquelle porte la collerette 51 d'une douille 50. Une pièce 142, en forme de rondelle, vient brider ladite douille sur la cheminée 14.

A l'extrémité de la bougie 13 on a représenté en vue écorchée le semi-conducteur 25, entre la gaine 30 et l'électrode centrale 40. La gaine 30, à son extrémité inférieure, forme une surface plane 31 perpendiculaire à l'axe de la bougie. Le semi-conducteur 25 de la bougie est interposé entre cette surface plane 31 et l'électrode centrale 40. L'extrémité du semi-conducteur 25, et la paroi interne de la gaine 30 définissent une cavité annulaire 20 de bougie.

La douille flottante 50 comprend une partie de forme cylindrique, d'un diamètre supérieur à celui de la gaine 30, avec en ses deux extrémités, deux disques cerclant la bougie 13. La paroi interne de la douille 50 et la gaine 30 définissent une cavité annulaire 10 de douille. Le disque inférieur 52 ferme la cavité 10 de douille. Le disque supérieur de la douille 50 est d'un diamètre plus grand et forme une collerette 53 venant se loger dans la glissière 141-142 de la cheminée 14. La partie supérieure de la douille 50, au dessus de la collerette 53, est de forme évasée afin de diriger l'air, extérieur à la chambre de combustion, vers des orifices 53' percés à travers cette collerette, au dessus de la cavité annulaire 10. L'air circule donc au travers de la cavité annulaire 10 pour se diriger vers des orifices 33, percés dans la partie inférieure de la gaine 30 sur la paroi parallèle à l'axe de la bougie 13. Ces orifices 33 sont inclinés et débouchent dans la cavité annulaire 20. L'air présent dans la cavité annulaire 10 traverse les orifices 33 et passe dans la cavité annulaire 20, impactant ainsi le semi-conducteur 25, lui permettant de refroidir.

Des orifices d'évacuation 35 sont percés, parallèlement à l'axe de la bougie, sur la surface plane 31 de la gaine 30. Ils permettent aussi d'éviter que du carburant ne se dépose sur le semi-conducteur.

Sur la partie inférieure de la cheminée 14, des orifices de ventilation 142 sont percés, perpendiculairement à l'axe de la bougie. L'air venant de l'espace extérieur à la chambre de combustion participe au refroidissement de cette zone de la chambre de combustion.

Ainsi l'air extérieur à la chambre de combustion peut pénétrer, par l'intermédiaire des orifices 53' dans la cavité annulaire 10 formée par l'aménagement de la douille 50. Puis, l'air passe par les orifices 33 de la gaine 30 dans la cavité annulaire 20 pour venir impacter le semi-conducteur de la bougie afin de le refroidir. Pour éviter que le carburant ne se dépose sur le semi-conducteur, des orifices 35 sont aménagés sur la partie inférieure de la gaine 30, laissant ainsi ressortir l'air.

Selon ce mode de réalisation, les orifices 33 sont inclinés vers la gaine de la bougie et les orifices 35 sont parallèles à l'axe de la bougie. Les formes des orifices ne sont pas limitatives, ainsi, dans d'autres modes de réalisations non présentés sur les figures, les orifices 33 peuvent être perpendiculaires à l'axe de la bougie, et les orifices 35 sont inclinés, divergents afin de ne pas gêner l'arc électrique créé entre l'électrode centrale et la gaine.

## Revendications

1. Agencement comprenant une bougie (13) du type à semi conducteur (25) dans une gaine (30), une cheminée pouvant être solidaire d'une chambre de combustion (1) de moteur à turbine à gaz, une douille flottante par l'intermédiaire de laquelle la bougie est montée dans la cheminée, permettant une reprise de dilatation selon un axe perpendiculaire à l'axe de la bougie, ladite douille flottante (50) comprenant une partie cylindrique (51) ménageant avec la bougie une cavité annulaire de douille (10) de circulation d'air de refroidissement, **caractérisé par le fait qu'**il comporte des moyens de guidage d'air pour refroidir le semi conducteur de la bougie, la gaine (30) et le semi conducteur (25) définissant à leur extrémité du côté de la chambre de combustion une cavité annulaire de bougie (20), et la gaine (30) comportant des orifices (33) au niveau de la cavité annulaire de bougie (20) communiquant avec la cavité annulaire (10) de la douille et des orifices (35) sur sa surface, qui en position de montage, fait face à la chambre de combustion (31).

2. Agencement selon la revendication 1, **caractérisé par le fait que** la douille (50) comporte un disque supérieur (53) formant une collerette coopérant avec une glissière (141-142) ménagée dans la cheminée (14).

3. Chambre de combustion comportant un agencement selon l'une des revendications 1 à 2.

4. Moteur à turbine à gaz comportant une chambre de combustion selon la revendication 3.

## Claims

1. An arrangement comprising an igniter plug (13) of the semiconductor-type (25) in a shell (30), a duct that maybe secured to a combustion chamber (1) of a gas turbine engine, a floating sleeve via which the igniter plug is mounted in the duct, in order to accommodate expansion along an axis perpendicular to the axis of the igniter plug, said floating sleeve (50) comprising a cylindrical part (51) which, with the igniter plug, forms an annular sleeve cavity (10) in which cooling air can circulate wherein said arrangement comprises means for guiding air to cool the semiconductor of the igniter plug, the shell (30) and the semiconductor (25) defining, at their combustion-chamber end, an annular igniter plug cavity (20), and the shell (30) comprising orifices (33) in the region of the igniter plug annular cavity (20) that communicate with the annular cavity (10) of the sleeve and orifices (35) on its surface that in a mounted position faces the combustion chamber.

2. The igniter plug arrangement as claimed in claim 1, wherein the sleeve (50) comprises an upper disk (53) that forms a flange collaborating with a slideway (141-142) formed in the duct (14).

3. A combustion chamber comprising an arrangement as claimed in one of claims 1 to 2.

4. A gas turbine engine comprising a combustion chamber as claimed in claim 3.

## Patentansprüche

1. Anordnung, umfassend eine Zündkerze (13) vom Halbleitertyp (25) in einer Hülle (30), wobei ein Kamin mit einer Brennkammer (1) eines Gasturbinenmotors einstückig sein kann, eine schwimmend gelagerte Buchse, mit Hilfe der Zündkerze im Kamin montiert ist, erlaubend eine Wiederaufnahme der Expansion gemäß einer Achse, die senkrecht zur Achse der Zündkerze ist, wobei die schwimmend gelagerte Buchse (50) einen zylindrischen Teil (51) umfasst, der mit der Zündkerze einen ringförmigen Buchsenhohlraum (10) zur Zirkulation von Kühlluft darstellt, **dadurch gekennzeichnet, dass** sie Mittel zur Führung der Luft umfasst, um den Halbleiter der Zündkerze zu kühlen, wobei die Hülle (30) und der Halbleiter (25) an ihrem Ende auf der Seite der Brennkammer einen ringförmigen Zündkerzenhohlraum (20) definieren und die Hülle (30) Öffnungen (33) auf der Ebene des ringförmigen Zündkerzenhohlraums (20) umfasst, die mit dem ringförmigen Hohlraum (10) der Hülle kommunizieren, und Öffnungen (35) auf ihrer Oberfläche, die in der Montageposition der Brennkammer (31) gegenüberliegt.

2. Anordnung nach Anspruch 1, **dadurch gekennzeichnet, dass** die Hülle (50) eine obere Scheibe (53) umfasst, die einen Kragen bildet, der mit einem Schieber (141 - 142) zusammenarbeitet, der im Kamin (14) angebracht ist.

3. Brennkammer, umfassend eine Anordnung nach einem der Ansprüche 1 bis 2.

4. Gasturbinenmotor, umfassend eine Brennkammer nach Anspruch 3.
